# EUROPEAN PATENT SPECIFICATION

(11) **EP 1 585 259 B1**
(45) Date of publication and mention of the grant of the patent: **23.02.2011**
(21) Application number: 05007425.1
(22) Date of filing: 05.04.2005
(51) Int. Cl.: H04L 12/28, H04L 12/46, H04Q 11/04, H04L 12/56, H04M 7/00, H04L 12/64

(54) **System and method for providing a multiple-protocol crossconnect**
System und Verfahren zur Bereitstellung von einem Crossconnect-Schalter mit mehreren Protokollen
Système et procédé pour fournir un brasseur à protocoles multiples

(30) Priority: 05.04.2004 US 560009 P; 01.06.2004 US 858517
(43) Date of publication of application: 12.10.2005
(73) Proprietor: Verizon Business Global LLC, Ashburn, VA 20147 (US)
(72) Inventor: DelRegno, Nick, Rowlett TX 75089 (US); Kotrla, Scott R., Wylie TX 75098 (US); Turlington, Matthew W., Richardson TX 75082 (US); Schell, Richard C., Allen TX 75002 (US); Bengston, Lee D., Murphy TX 75094 (US); McDysan, Dave E., Great Falls VA 22066-1102 (US); Bencheck, Michael U., Denison TX 75021 (US); Hardin, Ross S., Plano TX 75075 (US); Chiu, Howard, Plano TX 75023 (US); Drake, William, Garland TX 75044 (US)
(74) Representative: Hofmann, Harald

(56) References cited:
- EP-A- 1 176 774
- EP-A- 1 292 083
- WO-A-02/51069
- WO-A-03/075501
- US-A1- 2003 021 287
- US-A1- 2003 185 201
- US-A1- 2004 028 051

## Description

The present invention relates generally to a system and method for providing telecommunications services, and more particularly, to a system and method for providing a multiple-protocol crossconnect in an access network.

A commercial telecommunications network operated by a service provider supports voice and data communications between customer locations and includes an access network and a core network. Generally, customer devices communicatively couple to the access network, which in turn connects to the core network. The access network includes what many people refer to as "the last mile," that is, the connectivity from a customer location, such as an office building, to a point where a service provider has significant facilities, such as a metro hub or a "service edge" at the periphery of the core network. In contrast to the access network, the core network usually provides transport of large aggregate flows over long distances and handles the selective routing of each customer's voice and data traffic to other locations served by the network. The access network generally comprises a series of switches, aggregators, multiplexers, demultiplexers, routers, hubs, and the like which collectively serve to provide connectivity between customers' equipment and the core network.

The services required by customers, residential or business, vary greatly in the type of access services, bandwidth, quality of service (QoS), type of legacy equipment, and the like. Types of services typically include frame relay services, asynchronous transfer mode (ATM) services, broadband services, and the like. Typically, an access network provides switching or routing of some nature for each of these types of services independently, which in turn requires the access service provider to provision each of these services separately. In particular, the access service provider must be capable of meeting the customer's current and future needs in terms of bandwidth, QoS, and the like.

Generally, each type of service utilizes different interface and framing standards, and in particular, each type of service typically utilizes a different set of protocols. As a result, current access network elements must be equipped to interface with and operate upon flows for each type of service the elements are expected to handle. Each network element in an access network presently must deal with the particular format, addressing and protocol aspects of each type of access communication service it supports. Document WO 02/51069 describes a method for processing a packetized flow. This makes for costly and complex network elements and interferes with having flexibility to accommodate rapid shifts in resources allocated to different flows or different service types and to accommodate adoption of new service types. Accordingly, there is a need for a switch, or other access network elements, to process flows conforming to a variety of service types and to route or switch traffic flows between a large number of customer premise equipments and one or more service edges. There is also a need for such a network element to manage and process flows in a manner that enhances scalability of the access network in handling a large number of flows.

### SUMMARY OF THE INVENTION

These and other problems are generally solved or circumvented, and technical advantages are generally achieved, by embodiments of the present invention that provide a system and method for providing a high-density multiple-protocol crossconnect in an access network.

The present invention may be embodied in a method for processing a TDM communication, the method comprising: receiving a first TDM communication; determining whether the first TDM communication should be output as a packetized flow; based on the determining either converting the first TDM communication to a first packetized flow or switching the first TDM communication to a second TDM communication; and outputting the first packetized flow or the second TDM communication, respectively.

The present invention may be embodied in a method for processing a packetized flow, the method comprising: receiving a packetized flow; determining whether the packetized flow should be output as a TDM communication; converting the packetized flow to a first TDM communication based on the determining; and outputting the first TDM communication.

The present invention may be embodied in a method for processing a packetized flow, the method comprising: receiving a packetized flow from a customer, the packetized flow including a carrier tag; determining an output port associated with the packetized flow based on the carrier tag; and sending the packetized flow to a service edge via the output port.

The present invention may be embodied in a method for processing a packetized flow, the method comprising: receiving a packetized flow from a customer, the packetized flow including a first carrier tag; determining whether the packetized flow should be output as a TDM communication; converting the packetized flow to a first TDM communication based on the determining; and outputting the first TDM communication.

The present invention may be embodied in a method for processing a TDM communication, the method comprising: receiving a first TDM communication; determining whether the first TDM communication should be output as a packetized flow; switching the first TDM communication to a second TDM communication based on the determining; and outputting the second TDM communication.

The present invention may be embodied in a method for aggregating communication traffic, the method comprising: receiving a TDM communication; receiving a first packetized flow; converting the TDM communication to a second packetized flow; combining the first packetized flow and the second packetized flow into a third packetized flow; and sending the third packetized flow.

The present invention may be embodied in a method for aggregating communication traffic, the method comprising: receiving a first TDM communication; receiving a first packetized flow; converting the first packetized flow to a second TDM communication; combining the first TDM communication and the second TDM communication into a third TDM communication; and sending the third TDM communication.

The present invention may be embodied in a method for aggregating communication traffic, the method comprising: receiving a TDM communication; receiving a first packetized flow; converting the TDM communication to a second packetized flow; combining the first packetized flow and the second packetized flow into a third packetized flow; converting the third packetized flow to a second TDM communication; and sending the second packetized flow.

The present invention may be embodied in an apparatus according to claim 9.

Additional features and advantages of the invention will be described hereinafter which form the subject of the claims of the invention. It should be appreciated by those skilled in the art that the conception and specific embodiment disclosed may be readily utilized as a basis for modifying or designing other structures or processes for carrying out the same purposes of the present invention. It should also be realized by those skilled in the art that such equivalent constructions do not depart from the scope of the invention as set forth in the appended claims.

For a more complete understanding of the present invention, and the advantages thereof, reference is now made to the following descriptions taken in conjunction with the accompanying drawings, in which:
Figure 1 is a network diagram in accordance with an embodiment of the present invention;
Figure 2 is logical view of service emulation instances in accordance with an embodiment of the present invention;
Figure 3 is a block diagram including an exemplary embodiment of a layer 2 switch that may be used in accordance with an embodiment of the present invention;
Figure 4 is a diagram illustrating the switching function of layer 2 switches in accordance with an embodiment of the present invention;
Figure 5 is a diagram illustrating the use of service emulation in accordance with an embodiment of the present invention;
Figure 6 illustrates framing formats in accordance with an embodiment of the present invention;
Figure 7 illustrates framing formats in accordance with an embodiment of the present invention;
Figure 8 illustrates framing formats in accordance with an embodiment of the present invention;
Figure 9 illustrates a label swapping function in accordance with an embodiment of the present invention;
Figure 10 illustrates functions that may be performed by a layer 2 switch in accordance with an embodiment of the present invention;
Figure 11 illustrates QoS-related logical functions in accordance with an embodiment of the present invention;
Figure 12 illustrates QoS-related logical functions in accordance with an embodiment of the present invention; and
Figure 13 illustrates an example in which an access network consists of one or more layer 2 switches in accordance with an embodiment of the present invention.

The making and using of the presently preferred embodiments are discussed in detail below. It should be appreciated, however, that the present invention provides many applicable inventive concepts that can be embodied in a wide variety of specific contexts. The specific embodiments discussed herein are merely illustrative of specific ways to make and use the invention, and do not limit the scope of the invention.

The present invention will be described with respect to embodiments in a specific context, such as providing switching and routing services in an access network utilizing service emulation instances implemented across layer 2 switching elements. The invention may employ other techniques to carry communications flows. The invention may also be applied, however, to other types of devices, networks, communications links, and the like. Furthermore, while specific network configurations are illustrated and discussed herein, it is noted that network configurations may vary to include fewer or additional elements, such as routers, gateways, bridges, ATM switches, frame relay switches, firewalls, switches, and the like. The illustrated embodiments are provided for illustrative purposes only and are provided only to aid in the explanation and understanding of the concepts of the present invention. Aspects of the present invention are equally applicable to many types and configurations of networks and communications protocols.

It is further noted that, unless indicated otherwise, all functions described herein may be performed in either hardware or software, or some combination thereof. In one embodiment, the functions are performed by a processor such as a computer or an electronic data processor in accordance with code such as computer program code, software, and/or integrated circuits that are coded to perform such functions, unless indicated otherwise.

Generally, the present invention provides a logical pipe or tunnel across the access network as identified by one or more carrier tags which are applied to the traffic and which have significance for how the traffic is to be handled in the access network. Quality of service (QoS) measures, such as rate shaping and policing, may be applied at either or both of the CPE and the service edge device. Where the layer 2 switch offers direct customer interfaces, the layer 2 switch may also be involved in functions such as rate shaping, policing, and the like to provide a specific QoS. A layer 2 switch provides the switching between the CPE and the service edge device by evaluating a layer 2 label or tag applied to the traffic. Other possible services in the access network include prioritization and/or marking of non-conforming traffic. Other aspects of the role of the layer 2 switch may include the functions, interfaces, and protocols needed to establish layer 2 forwarding of customer traffic across the access network in support of access to other services and/or native connections between customers.

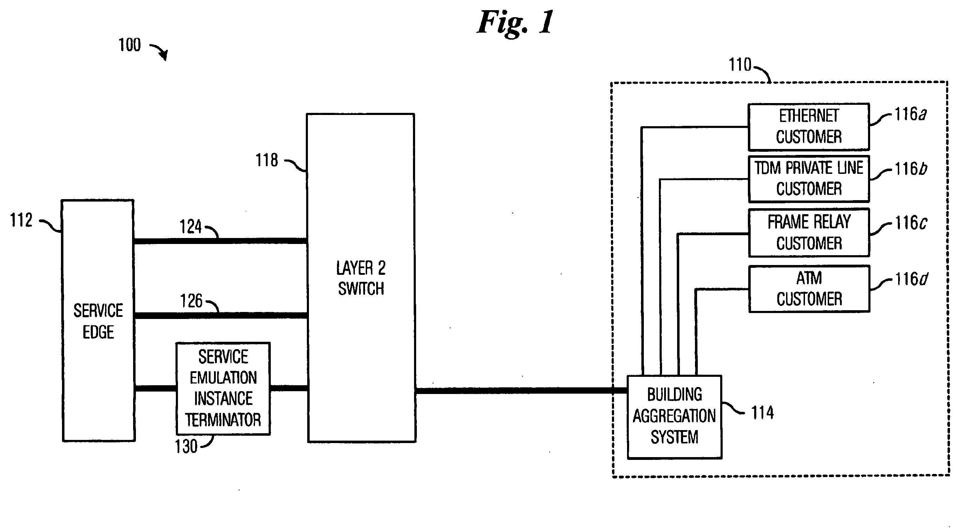

Figure 1 is a network diagram in accordance with an embodiment of the present invention. Figure 1 illustrates an access network 100 by which a customer site 110 is coupled to, and accesses the services of, a service edge 112. Generally, the service edge 112 represents the access points to a service provider's network, which may comprise one or more core networks (not shown). A core network may comprise, for example, a system of TDM switches, such as a network of Class 3 telephone switches. A core network may also comprise an ATM and/or a frame relay network covering much the same geographical territory as the TDM network. Moreover, a network of IP routers may also be supported in the core network. While these networks may overlap or cover much the same geographical territory, each are designed to efficiently carry particular types of traffic or exhibit particular properties that are amenable to certain types of traffic. Although this "multiplanar" network situation may frequently be encountered, it should be understood that the present invention may be equally applicable to a converged core network where native layer 2 handoff at the service edge is preferred. Service edge 112 is illustrated as a single network element for illustrative purposes only, and may actually include multiple network elements or multiple access interfaces having different capabilities.

By way of example, sources of different types of communications are depicted within customer site 110. One of the sources is Ethernet customer 116a coupled to a building aggregation system 114 over any form of connectivity amenable to Ethernet traffic, such as a 100BaseT, Gigabit Ethernet(GbE) or DSL connection. Another source of traffic may be private line customer 116b, which is coupled to the building aggregation system 114 via DS1 line. Source 116c represents frame relay customers having their frame relay traffic carried over TDM facilities such as DS1 lines to the building aggregation system 114. Asynchronous transfer mode (ATM) customer 116d represents ATM customers having their ATM cell traffic carried over TDM facilities such as DS1 lines to the building aggregation system 114. Other types of connections may be used as required to support specific customers' needs. Each of the CPE 116 may comprise one or more devices. For example, the Ethernet customer 116a typically includes a router communicatively coupled to other routers, hubs, user workstations, servers, or the like. The CPE 116a-116d are collectively referred to as CPE 116.

To provide connectivity toward service edge 112, the building aggregation system 114 is coupled to a layer 2 switch 118 via a communications link 113 such as a DS3 communications link or the like. The layer 2 switch 118 may provide switching and routing of traffic based upon information applied to the traffic, the information corresponding roughly to Layer 2 or the "data link layer" of the OSI Reference Model, and without having to examine the content of the customer data in the traffic.

Communications link 113 communicatively coupling the building aggregation system 114 and the layer 2 switch 118 may be any suitable communications link, such as an optical fiber, optical ring, a gigabit Ethernet (GbE) connection, or the like. It is also worth noting that the layer 2 switch 118 may be coupled to a large number of customer sites 110 and building aggregation systems 114 to perform an intermediate aggregation and distribution function within the access network 100. The layer 2 switch 118 may also be coupled directly to the CPE 116.

In accordance with the present teachings, the building aggregation system 114, or some other network element, can be equipped to serve as one end of a plurality of carrier-tagged flows. A carrier-tagged flow represents a logical communications channel or flow established to carry carrier-tagged communications between two or more parties, or two or more points served by a communications system. The carrier-tagged communications can be voice, data, audio, video, or any other type of communications. A carrier-tagged flow may be implemented using a service emulation instance, such as a pseudowire as described in an IETF draft document entitled "draft-ietf-pwe3-arch-06.txt." This technology allows a packet-switched network to emulate other types of packet or TDM transport services. For example, a pseudowire may be implemented in an Ethernet network, yet may provide transport of communications that mimics the attributes and performance of common data link protocols, such as ATM, frame relay, as well as SONET/SDH or DSn signals. An Ethernet-based pseudowire may employ variable length packets even when carrying fixed-length cells or frames, such as 53-byte ATM cells. A pseudowire is typically implemented along a tunnel implemented in a packet-switched network. Some types of tunnels that may be suitable for carrying pseudowires, or even other types of communications that may be employed in conjunction with the present teachings, include Label Switched Paths(LSPs) according to the MultiProtocol Label Switching(MPLS) protocol, Layer 2 Tunneling Protocol(L2TP) tunnels, IPsec tunnels, etc.

Another example of a technique suitable for implementing a carrier-tagged flow is a logical networking tagged flow, such as a virtual local-area network (VLAN) or the like. A technique for achieving VLAN logical subnetworking is described in IEEE Standard 802.1Q. Briefly, a VLAN provides for designating and acting upon data packets in a manner that makes multiple LAN communication flows carried over a commonly shared communication path appear to be partitioned from one another as if traveling over separate, dedicated LAN connections. In accordance with an exemplary embodiment of the present teachings, a VLAN tagging approach may also be used for carrier-tagging of flows.

Carrier VLAN tags having significance for routing and processing in the access network may be used to encapsulate and tag customer flows. As they are encapsulated and/or tagged, customer flows may or may not already contain additional imbedded VLAN tags having significance within the customer's virtual network in accordance with typical 802.1 Q usage. In accordance with the present teachings, the VLAN tagging approach may be reused for carrier-tagging purposes and may be locally significant on any port, with tag values possibly being replaced on a hop-by-hop basis.

In accordance with the present teachings, carrier tags applied to traffic to support handling of flows through an access network, whether in the form of tunnel labels, pseudowire labels, VLAN tags, etc., may be 'stackable' to any depth to support efficient flow management in the context of hierarchical aggregation and distribution between service edge(s) and customer locations.

Each carrier-tagged flow is identified by a carrier tag having a particular tag value. For example, a carrier-tagged flow implemented as a service emulation instance is identified by a service emulation instance mapping identifier. In the case in which a pseudowire is used as a service emulation instance, the service emulation instance mapping identifier may correspond to a pseudowire label. Carrier tags may be locally significant on any port and the tags can be swapped on a hop-by-hop basis as needed to provide a large number of flows using the finite number of identifier values that are available (approximately 1 million in the case of pseudowire labels). In this manner, switching in the access network can be simplified by encapsulating traffic in carrier-tagged flows and by interpreting and manipulating the corresponding carrier tags. The access network may transparently support a mixture of flow types and customer content, including any customer-specific addressing or virtual networking fields imbedded in the customer content. The pseudowire architecture, as promulgated by the Internet Engineering Task Force (IETF), provides one example of an approach involving encapsulation and labeling of traffic that may be adapted for use as a carrier-tagged flow. It should be noted, however, that other protocols may be used, and embodiments of the present invention may be implemented with other types of protocols and physical connections.

The building aggregation system 114 couples traffic of various types, such as traffic from the CPE 116a-116d, onto the appropriate corresponding carrier-tagged flows that have been established to emulate the type of transport suitable for each type of traffic. It should be noted that while in an embodiment the building aggregation system 114 serves as one end of the carrier-tagged flow, other embodiments may be implemented in which the CPE 116, the layer 2 switch 118, or some other intermediate device acts as one end of the carrier-tagged flow.

The building aggregation system 114 couples traffic of various types, such as traffic from the CPE 116a-116d, onto the appropriate corresponding carrier-tagged flows established for reaching the service edge. Where service emulation instances are used as carrier-tagged flows, a service emulation instance terminator 130 may serve as the other end of a number of service emulation instances which have originated at one ore more building aggregation systems 114 and passed through layer 2 switches 118. The service emulation instance terminator 130 switches or routes traffic from service emulation instances to a corresponding port and/or flow communicatively coupled to the service edge 112. The building aggregation system 114, layer 2 switch 118, service emulation instance terminator 130, and communications links therebetween may coordinate to simultaneously function as any of the various data-link layer transport types that may be required by customers, including ATM, frame relay, TDM, Ethernet/IP, and the like.

Alternatively, a service edge 112 may incorporate the functions of a service emulation instance terminator 130 or may otherwise be capable of directly accepting and processing carrier-tagged flows. In this case, a service edge 112 may be coupled more or less directly to layer 2 switch 118 and the communications to and from the service edge may bear flow-identifying carrier tags in the form ofpseudowire labels, tunnel labels, VLAN tags or the like. Service emulation instance terminator 130 may nevertheless be useful in situations where an existing or legacy service edge lacks the ability to handle carrier-tagged access communications. As mentioned earlier, service edge 112 may actually represent several separate access points, perhaps to different types of core networks. Some access points within service edge 112 may be amenable to carrier-tagged flows whereas others may not be. Links 124 and 126 may represent links to TDM -capable ports on the service edge from TDM ports on layer 2 switch 118. It is also possible that, for example, one or both of these links may represent packetized data links and may even represent a service edge that is able to accept carrier-tagged flows, such as carrier-tagged pseudowires, directly without requiring service emulation instance terminator 130.

A service emulation terminator 130 suitable for use with the present invention is disclosed in U.S. Patent Application 20050226215, entitled "Apparatus and Method for Terminating Service Emulation Instances".

In an exemplary embodiment, Ethernet may be utilized as the layer 2 protocol over which carrier-tagged communications are transmitted. The application of Ethernet in the access network can be based on TDM encapsulation, using X.86 or GFP, e.g. Ethernet over SONET (EoS). While Ethernet is desirable for supporting variable length packets, other protocols or frame formats may be used for the transport and processing of access communications.

In an implementation using service emulation instances, building aggregation system 114 may apply a unique service emulation instance mapping identifier to each of the flows from the CPE 116a-116d; and transmits the frames or packets bearing the traffic and service emulation instance mapping identifiers to the layer 2 switch 118. Similarly, the building aggregation system 114 may receive data associated with a service emulation instance identifier from the layer 2 switch 118 and converts the data to a format compatible with the corresponding CPE 116.

In operation, the building aggregation system 114 receives Ethernet traffic from Ethernet customer 116a via the building "riser." The building aggregation system 114 receives this traffic along a port that is known to correspond to Ethernet customer 116a and maintains an association between the customer's port and Ethernet traffic stream and a corresponding carrier-tagged flow. Likewise, at the other end of the carrier-tagged flow, the service emulation instance terminator 130, the layer 2 switch, or some other network element delivers the customer's traffic to the service edge 112 and may coordinate with the service edge 112, such as by mapping of port numbers or directing of flows, to ensure that the network identifies the customer's traffic as such and appropriately handles the traffic.

To establish or modify a customer's carrier-tagged flow between the CPE 116 and the service edge 112, the customer may indicate to the network service provider the desire to establish communications in a particular manner. This request may be submitted either manually or automatically through a user network interface (UNI). As will be described in greater detail below, the establishment of communications through the access network shown may originate in a variety of ways. To coordinate fulfillment of an access communications request, a network management system, provisioning function, or the like, may dispatch provisioning and configuration instructions to the building aggregation system 114, the layer 2 switch 118, the service emulation instance terminator 130, or other network elements. To some degree, these elements may perform some functions autonomously or may coordinate with one another to fulfill requests.

While some aggregation can be provided by the building aggregation system 112, the layer 2 switch 118 may also provide further aggregation or first-level aggregation of some flows. For example, the layer 2 switch 118 may be communicatively coupled to legacy systems not equipped with the aggregation services of the building aggregation system 112. In these situations, the layer 2 switch 118 may be configured to provide the ability to accept various inputs from varying types of CPE 116 and to aggregate the traffic onto one or more logical pipes. As another example, the layer 2 switch 118 may aggregate traffic from multiple customer sites 110, building aggregation systems 112, and other layer 2 switches.

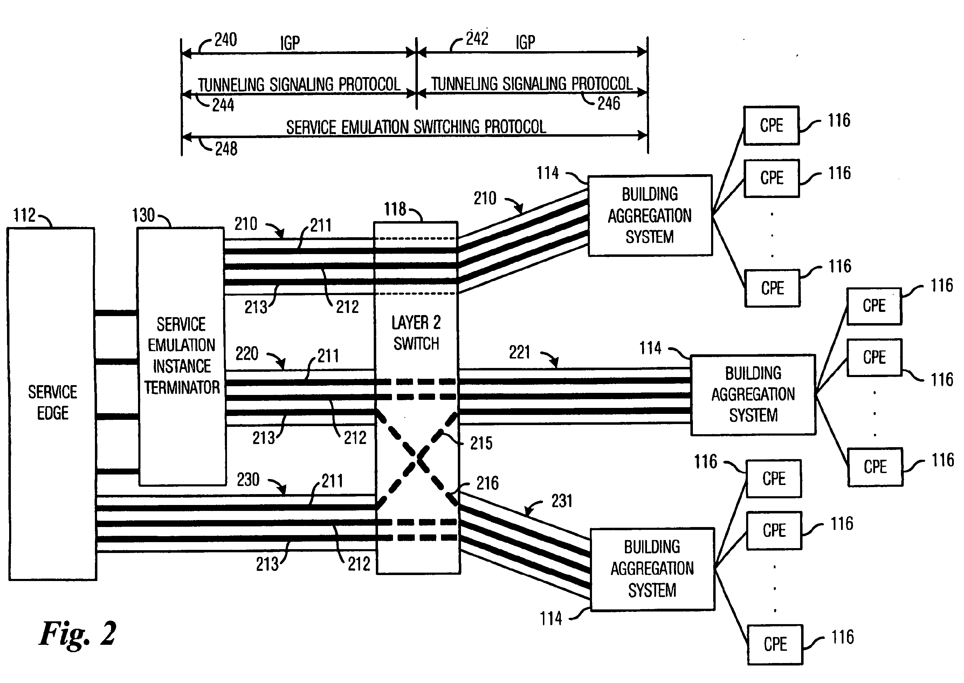

Figure 2 is a logical view of a carrier-tagged flow in accordance with an embodiment of the present invention. As described before, one purpose of an access network is to efficiently and flexibly couple customer sites (represented by building aggregation systems 114 communicatively coupled to the CPE 116) to the edge of a service provider's network represented by the service edge 112. The layer 2 switch 118 is shown as an intermediary and may participate in grooming, aggregating and directing communications traffic in the access network, as well as performing crossover switching between TDM ports and packet-oriented ports. Note that Figure 2 illustrates two-hop paths, although it is possible that there are some intervening transmission elements or other layer 2 switches 118 along the access coupling.

In Figure 2, multi-protocol label switching (MPLS) label switched paths (LSPs) 210, 220, 221, 230, and 231 are shown to have been established between various building aggregation systems 114 and the service edge 112 for illustrative purposes. Each LSP corresponds to a pathway or a means of forwarding traffic from the building aggregation system 114 to the service edge 112 and may comprise one or more carrier-tagged flows, e.g., carrier-tagged flows 211, 212, and 213, that may carry traffic based upon a carrier tag prepended to the traffic and a mutual understanding among the network elements as to how to handle traffic having a specific tag value.

Each LSP may accommodate one or more service emulation instances and each service emulation instance can be of a specific type. By virtue of VLAN "stacking" and having different layer 2 addresses present in the traffic that may be encapsulated, each service emulation instance 211, 212, 213 may carry multiple customer-specified flows. This behavior can be controlled by the customer and can be transparent to the access network 100. In accordance with the present teachings, the access network may be unconcerned with anything but the outermost labels or carrier tags applied for access network purposes, such as tunnel labels or service emulation instance mapping identifiers applied to the traffic.

Label switched path 210 represents one embodiment of the present invention in which the label switched path is routed via a tunnel label. In other words, each unit of traffic(frame, packet, etc.) is tagged with a tunnel label and elements use the tunnel label to determine how to process and where to send the traffic. In this situation, each service emulation instance within the tunnel identified by the tunnel label, e.g., label switched path 210, is routed or switched in the same manner, as illustrated by the dotted label switched path line and the solid service emulation instance lines through the layer 2 switch 118. Layer 2 switch 118 may efficiently switch traffic among its ports by observing and acting upon the tunnel label present in the traffic. In an alternative embodiment, the service emulation instance may be routed or switched based upon a service emulation instance mapping identifier. In this situation, the label switched paths are established between the various building aggregation systems 114 and the layer 2 switch 118 and between the layer 2 switch 118 and the service edge 112. Where tunnels are established on a hop-by-hop basis, such as tunnel 231 between building aggregation systems 114 and the layer 2 switch 118, tunnel labels may be optional and switching within layer 2 switch 118 may be based upon a service emulation instance mapping identifier present in the traffic as just described.

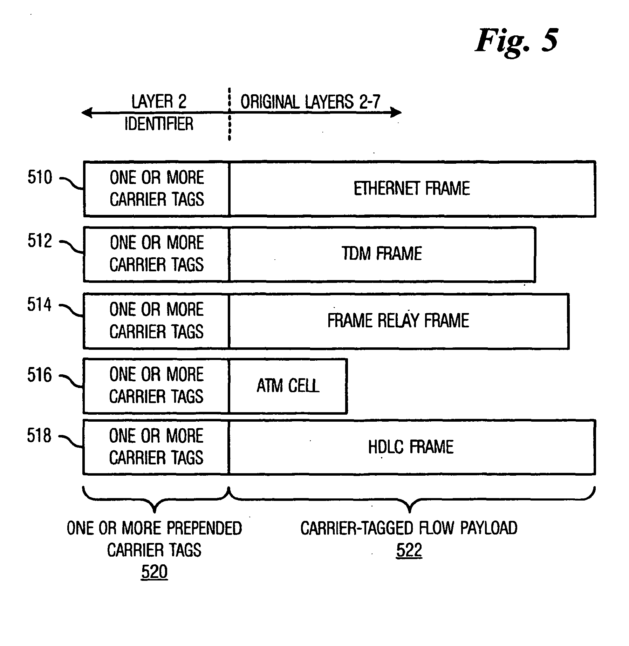

For example, reference numerals 220 and 230 indicate label switched paths established between the layer 2 switch 118 and the service emulation instance terminator 130, and reference numerals 221 and 231 indicate label switched paths established between various building aggregation systems 114 and the layer 2 switch 118. As indicated by the dotted service emulation instance lines 215 and 216, each of the service emulation instances within label switched paths 220, 221, 230, and 231 may be routed or switched independently of each other as they pass through layer 2 switch 118. The tunnel label and service emulation instance mapping identifier are discussed in greater detail below with reference to Figure 5.

As depicted by reference numeral 248, a label selection or service emulation switching protocol, such as the Label Distribution Protocol (LDP), may be exercised among the service emulation instance/LSP endpoints, namely the building aggregation system 114 and the service emulation instance terminator 130. Reference numerals 240 and 242 represent the choice of routing between the building aggregation system 114 and the layer 2 switch 118 and between the layer 2 switch 118 and the service emulation instance terminator 130. Identifying and selecting the appropriate paths through the access network may be accomplished using an interior gateway protocol (IGP) such as the Open Shortest Path First-Traffic Engineered (OSPF-TE) approach as described in Internet Engineering Task Force's (IETF's) Request For Comments (RFCs) 2328, 2676, et al.. Other routing protocols are known and may be used.

Reference numerals 244 and 246 indicate that a tunneling signaling protocol, such as the Resource Reservation Protocol (RSVP), may also be used in conjunction with other techniques during establishment of the label switched paths so that the elements involved along the path commit to allocating a specific quantity of bandwidth and other resources to support the requested flow and its performance requirements. Alternatively, it is possible to establish static LSPs wherein little or no signaling is required.

Multiprotocol label switching (MPLS) is described in documents IETF's RFCs 3031, 2702, et al. maintained by the Internet Engineering Task Force (IETF), which are incorporated herein by reference. Related to the negotiation of labels that are used in MPLS, the label distribution protocol (LDP) is described in IETF's RFC 3036, which is also incorporated herein by reference. The label distribution protocol is also discussed in IETF's Draft entitled "draft-ietf-pwe3-control-protocol-06.txt." The use of RSVP, MPLS and LDP are shown by way of example only and should not be construed as limiting the ways in which the present invention may be implemented.

Figure 2 is provided as a logical view and various physical implementations may be used. For example, each of the label switched paths 210, 220, 221, 230 and 231 may be transported over one or more communications links. It should also be noted that certain of the flows 211, 212, and 213 are illustrated as remaining together within each of the labeled switched paths for illustrative purposes only. Upon reaching a switching point, such as layer 2 switch 118, at the terminus of a tunnel, such as label switched path 221, each flow through the access network may be switched independently based upon, among other things, the type of service being provided, the requested service edge, one or more aspects of the traffic, and the like. This switching possibility is depicted by dashed lines 215 and 216 in FIG 2.

Once the service emulation instance is established, the building aggregation system 114 maintains an association between the service emulation instance mapping identifier and the port and/or virtual circuit through which the customer's traffic is received. Thus, as traffic is received along this port, it is coupled to the correct service emulation instance that has been established. For example, the traffic from CPE 116a-116d enter through respective ports of the building aggregation system 114 and are coupled onto suitably configured service emulation instances.

In practice, the frame relay traffic from the CPE 116c , although passing through DS1 lines in the building riser, may be extracted as frame relay frames by the building aggregation system 114 and coupled into FR-type service emulation instances. This is more efficient than passing the FR-laden DS1 communications through a service emulation instance. The DS1 circuit would unnecessarily reserve a constant bandwidth at all times whereas carrying the frame relay traffic allows for multiplex gains, including statistical multiplexing.

The service emulation instance terminator 130 may terminate a large number of service emulation instances that have originated from one or more building aggregation systems 114. The service emulation instance terminator 130 may be viewed as "front ending" the service edge 112. At the service emulation instance terminator 130, the various service emulation instances are terminated and the traffic carried through each service emulation instance is recovered and passed to the service edge 112 appropriate for the type of traffic. Typically, frame relay traffic arriving through a service emulation instance is to be passed along to a frame relay core network, if there is one. Likewise, TDM traffic should be passed along to a TDM network, and Ethernet or IP traffic should be passed along to the packet-switched service network in the core. However, one type of transport may be carried over another, for example, to carry IP traffic over a SONET TDM core network. Consequently, the service emulation instance terminator 130 may also provide interworking or adaptation so that frame relay traffic that arrives through a service emulation instance may be passed along to an Ethernet-based service edge element for transport over something other than an end-to-end frame relay network.

For convenience, the operation of exemplary embodiments of the present invention discussed herein are described in terms of traffic flowing from the CPE 116 to the service edge 112. However, it should be noted that the same techniques discussed herein also handle traffic leaving the service edge and being distributed to an appropriate customer endpoint. Every element may serve a complementary role related to the direction of flow. The service emulation instance terminator 130 receives aggregated flows from the service edge 112 and sends the traffic to a layer 2 switch 118 over a communications link, but it also receives traffic from a layer 2 switch 118 over the communications link and distributes the traffic to the appropriate service edge 112. The layer 2 switch 118 and the building aggregation system 114 may also operate bi-directionally. The service emulation instance terminator 130 may also perform aggregation services to aggregate flows from a plurality of service edges to one or more flows to be transmitted to the building aggregation system 114. It is also worth mentioning that some traffic through an access network may be from one customer location to another in a given vicinity and may not necessarily be destined for a service edge. Many of the techniques described for traffic between a customer location and a service edge would be applicable to this situation as well.

The bi-directionality of some traffic may have implications for the establishment of pseudowires if MPLS tunnels or the like are utilized. For example, where an RSVP/LDP mechanism is used to establish label switched paths, a bi-directional link may require initiating the formation of a service emulation tunnel in one direction, originating at the building aggregation, and forming the corresponding service emulation tunnel in the reverse direction by originating an RSVP request from the service emulation instance terminator 130. These service emulation tunnels will be independently formed, may have different QoS requirements, and may take different routes between the building aggregation system 114 and the service emulation instance terminator 130.

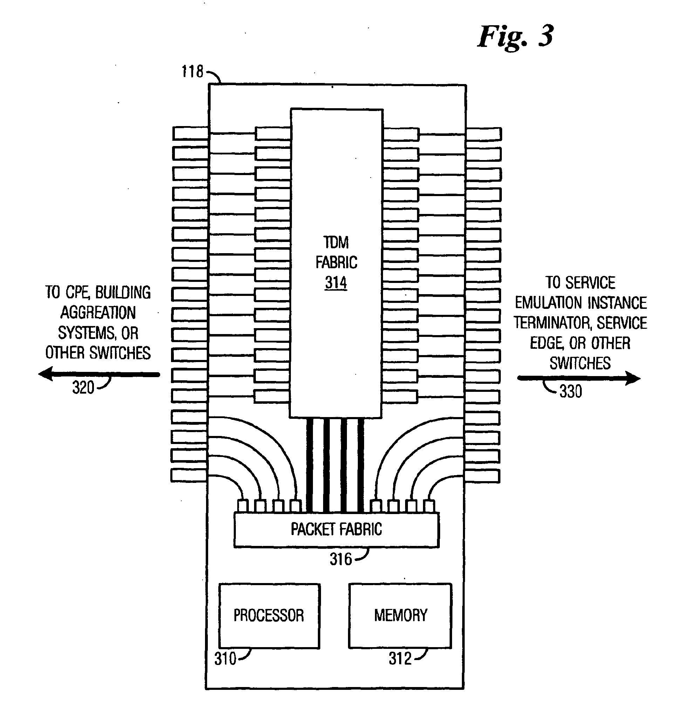

Figure 3 is a block diagram including an exemplary embodiment of a layer 2 switch that may be used in accordance with an embodiment of the present invention. The layer 2 switch 118 comprises a processor 310, memory 312, a TDM fabric 314, and a packet fabric 316. Generally, the processor 310 with the memory 312 provides the processing capabilities to provide switching/routing instructions, provisioning, maintenance, and control functionality. The TDM fabric 314 provides the ability to switch or route TDM traffic, and the packet fabric 316 provides the ability to switch or route packetized traffic.

The layer 2 switch 118 includes CPE-side ports 320 and service-edge-side ports 330, each of which may support multiple types of connections and protocols. In an embodiment of the present invention, any port could face either CPE or service edge, on a port-by-port basis. The CPE-side ports 320 may communicatively couple to CPE, or equipment communicatively coupled between the CPE 116 and the layer 2 switch 118. The equipment on the CPE-side of the layer 2 switch 118 may include, for example, CPE 116, the building aggregation system 112, another switch, routers, hubs, add/drop multiplexers, or the like. In contrast, the service-edge-side ports 330 are communicatively coupled to the service edge 114 or equipment communicatively coupled between the layer 2 switch 118 and the service edge 114. For example, network elements that may communicatively couple to the service edge side ports may include the service edge 114, the service emulation terminators 130, another switch, routers, hubs, multiplexers, or the like.

The CPE-side ports 320 and service-edge-side ports 330 provide connectivity for TDM traffic and packetized traffic. TDM traffic can be received via one or more optical communications links that support high-speed, high-volume traffic, such as, for example, an OC-12, OC-48, OC-192, or the like. Other communications links, such as T1 or DS3 signals over electrical, optical or wireless connections, may also be used. Packet traffic can be received via, for example, one or more GbE or 10GbE communications links. The TDM traffic may comprise packets transmitted via a TDM transport, and the packet data may comprise TDM data transmitted via a packet transport.

It should be noted that the TDM fabric 314 and the packet fabric 316 can be interconnected, via TDM/packet conversion framers as described later, thereby allowing incoming TDM traffic to be routed to an outgoing TDM port or an outgoing packet port. Similarly, incoming packet traffic may be routed to an outgoing packet port or an outgoing TDM port. The need to port traffic across TDM and packet fabrics may arise from several practical scenarios. In one situation, a customer site may be coupled to the layer 2 switch through a TDM (T1, DS3) connection over which packetized data may be sent, using X.86 or GFP, for example. Consequently, although the base transport is TDM, the traffic may actually represent a packetized flow that is appropriate to be aggregated with other packet data flows and forwarded to a service edge as such. (In this scenario, it is also possible that the packetized flow, in turn, carries or emulates a TDM circuit, resulting in a protocol stacking of TDM-over-packet-over-TDM.) In another situation, some of the packetized traffic from a customer received along a packet connection may need to go to a TDM-oriented service edge. Either of these situations requiring TDM/packet crossover may be the subject of flow management or provisioning control implemented within, or externally directed to, layer 2 switch 118.

The use of two separate fabrics depicted in FIG 3 is only one example implementation. In an alternative implementation, layer 2 switch 118 may employ a single switching fabric in conjunction with port cards, or functions at each port, which convert the various types of communication into a unified format compatible with the switch fabric. The present invention is not limited to either of these proposed designs or from being implemented in yet another way.

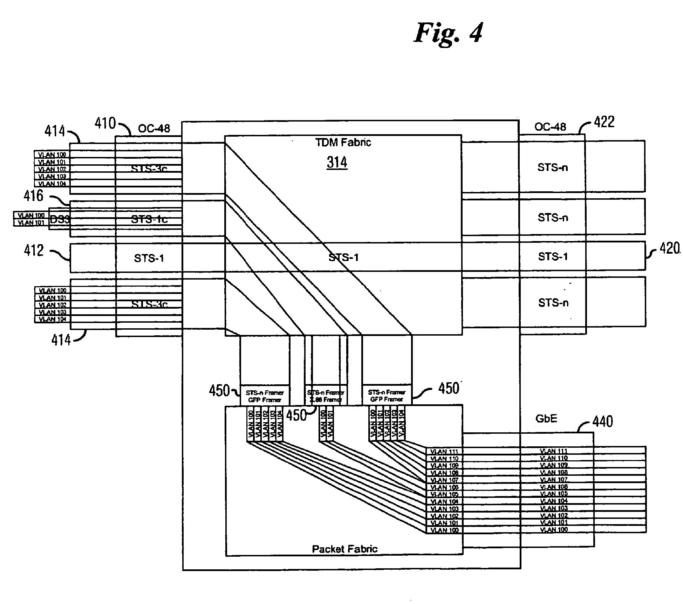

Figure 4 is a diagram illustrating the switching function of layer 2 switches in accordance with an embodiment of the present invention. It should be noted that Figure 4 illustrates an embodiment in which VLANs are utilized as a form of carrier-tagged flow. As discussed above, other mechanisms, such as pseudowires or the like, may be used, with switching behavior then being based upon interpretation and manipulation of pseudowire labels, tunnel labels, etc. A flow requiring such crossover may be identified by having a particular carrier-tag value and, accordingly, it may be said that the routing of the frames of a flow from packet to TDM or vice versa may be determined based upon the value of one or more carrier tags within the traffic-bearing frames.

Illustrated is an incoming OC-48 optical carrier 410 comprising an STS-1 line signal 412, a first STS-3c line signal 414, an STS-1c line signal 416, and a second STS-3c line signal 418. The STS-1 line signal 412 is routed via the TDM fabric 314 to an outgoing STS-1 line signal 420 on an outgoing OC-48 optical link 422.

Traffic on the other line signals, e.g., the first STS-3c line signal 414, the STS-1c line signal 416, and the second STS-3c line signal 418, are shown to be routed by the TDM fabric 314 to the packet fabric 316. The packet fabric 316, based upon the carrier tag, routes the traffic to a packet-based communications link, such as the GbE link 440. It should be noted that traffic routed between the TDM fabric and the packet fabric may require a framer 450 to format the traffic appropriately for the associated transport. Generally, the framers 450 extract the payload from the STS-n Synchronous Payload Envelope (SPE) and decapsulate the X.86 or GFP packet (and the reverse), presenting the Layer 2, labeled packet to the switch function for routing.

Figure 4 also illustrates an embodiment in which, when VLANs are utilized to implement a carrier-tagged flow, VLAN identifiers are locally significant at each interface and may be changed on a hop-by-hop basis. For example, each of the first STS-3c line signal 414, the STS-1c line signal 416, and the second STS-3c line signal 418 have a VLAN utilizing VLAN identifier 100. The packet fabric 316 aggregates the VLANs from each of the first STS-3c line signal 414, the STS-1c line signal 416, and the second STS-3c line signal 418 for transport across a single GbE communications link 440. In the course of being routed to link 440, some flows that entered along optical carrier 410 will undergo a change of VLAN identifiers to assure uniqueness at the outbound interface. For example, the 'VLAN 100' flows indicated within line signals 414, 416 and 418 will have to be reassigned distinguishable new values as shown.

Of course, some coordination among network elements and management of data in one or more management information bases will assure that when traffic tagged with VLAN value 100 is received elsewhere, it will be understood that this represents the flow that was introduced within line signal 414 having a VLAN tag value of '100'. As an alternative to changing the existing VLAN carrier tags in this manner, it may be desirable to simply stack an additional VLAN tag structure onto the traffic to achieve the required uniqueness. This outermost VLAN tag may then be stripped off or 'popped' when the aggregated flows reach a point where they will be separated again, such as at a service edge. A manner in which VLAN tags may be stacked is sometimes known as "Q-in-Q", referring to application of principles in IEEE Standard 802.1Q. This approach also requires some coordination among elements involved in routing and terminating the flows.

Figure 5 illustrates examples of data messages or frames that may be transmitted into the access network, or received from the access network, by the building aggregation system 114 in accordance with an exemplary embodiment of the present invention. Each of messages 510-518 have two portions: a carrier-tagged flow payload 522 and one or more prepended carrier tags 520. The carrier-tagged flow payload 522 represents, for example, the information as it is received from customer premise equipment at the customer site. The different types of messages shown correspond to various formats associated with a particular type of CPE interface, such as, for example, an Ethernet frame message 510, a TDM frame message 512, a frame relay frame message 514, an ATM cell message 516, or the like. Other messages, such as a high-level data link control (HDLC) frame 518, an ATM application adaptation layer 5 (AAL5) protocol data unit (PDU), or the like, may also be used. In general, the messages will usually carry various types of customer data corresponding to layers 2-7 of the OSI Reference Model.

As FIG 5 shows, each message type may be tagged and processed in a uniform manner by the addition of one or more carrier tags. FIG 5 reflects the format of composite messages that are sent between a building aggregation system 114, a service edge 112 and any other intervening elements. As illustrated in FIG 5, the carrier-tagged flow payload 522 is kept substantially intact and a carrier tag 520 is prepended to the carrier-tagged flow payload 522 to prepare it for transmission through the access network. Depending on implementation, the carrier tag 520 may comprise, for example, a pseudowire label, a VLAN identifier, a tunnel label or the like. Multiple carrier tags may be stacked within a message or frame to provide for a hierarchical aggregation and routing mechanism to be implemented in the access network.

It is particularly noteworthy in FIG 5 that, regardless of message type, all of the carrier tags 520 may be of uniform format. (In the case of tunnel labels, for example, messages of different types may even have the same tag value if they happen to be routed commonly.) The use of a uniform carrier tag format for all message types makes it possible for simple, generic handling of all traffic types through the access network using a uniform set of network elements that process traffic based on carrier tags. The switching elements within the access network may simply inspect the carrier tag(s) 520 of messages to determine how the message should be switched or routed without regard to message type or contents. In this manner, the access network becomes "service agnostic" and does not have to be concerned with the specifics of the protocols or addressing imbedded in the customer traffic. The generic nature of the carrier tag also allows for readily supporting any other message types not shown in FIG 5, with little or no changes being required in the design and operation of the layer 2 switches 118 or other elements.

In some implementations, it may be desirable to prepend one or more tunnel labels (not shown) to the messages 510-518. A tunnel label allows a tunnel to be established throughout the access network, such as between a building aggregator and a service edge, improving scalability in the network. This mechanism may be particularly useful when many service emulation instances are to be routed to the same destination or service edge. By assigning the service emulation instances to a common tunnel, network elements, such as the layer 2 switch 118, may collectively route the service emulation instances within the tunnel by evaluating the tunnel label. In an exemplary embodiment, the tunnel label is an LSP label prepended to the messages 510-518. In accordance with the present teachings, tunnel labels may also be stacked to any degree needed to support a tunneling hierarchy, which may further facilitate efficient and scalable management of large numbers of flows.

Although the carrier-tagged flow payload 522 is shown and described as being kept essentially intact, it may be desirable in some situations to modify this original message. For example, the original message portion 522 of the Ethernet frame message 510 and the frame relay frame 514 frequently includes a frame check sequence (FCS). In many networks, the FCS is not used and may be removed. In other cases, the Ethernet frame check sequence (FCS) as received in the Ethernet frame may optionally be included, as is, rather than being deleted or recalculated by the building aggregation system 114. This can be advantageous for detecting errors or corruption of the data that might occur as the customer payload traverses the network.

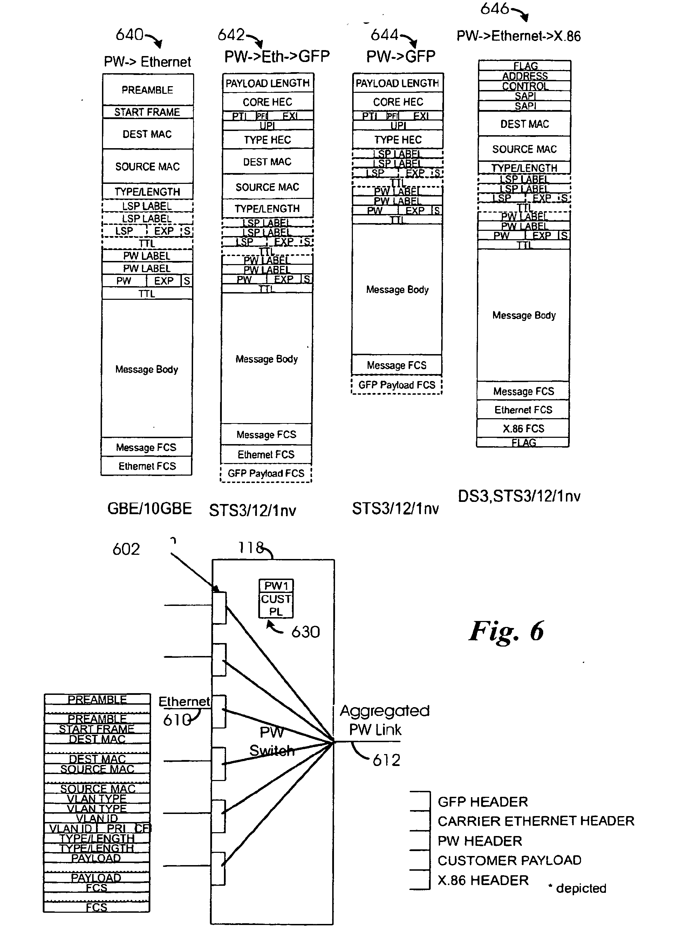

Figure 6 illustrates framing formats in accordance with an exemplary embodiment of the present invention. It should be noted that Figure 6 illustrates an embodiment in which pseudowires are utilized as the carrier-tagged flow. Other methods and apparatuses may be used. An encapsulation function 602 receives customer payload information and encapsulates the customer payload by prepending a carrier tag, as discussed above with reference to Figure 5, and other carrier header information. It should be noted that, in some networks, the traffic received by the layer 2 switch 118 may already be encapsulated. In these situations, the layer 2 switch 118 may not need to perform an encapsulation function 602, and may simply switch or route the traffic based upon the carrier tag already present.

For example, in Figure 6 the layer 2 switch 118 routes traffic between an Ethernet communications link 610 (which may be communicatively coupled to CPE) and an aggregated pseudowire communications link 612. The layer 2 switch 118 receives a flow in the form of Ethernet frames, each frame including Ethernet header information and customer payload information. The layer 2 switch 118 prepends a pseudowire label to the Ethernet frame as indicated by the encapsulated message 630. It should be noted that the Ethernet frame received may be left substantially unmodified, and the pseudowire label, and other encapsulating information, is placed around the received Ethernet frame. It should also be noted that the Ethernet frame check sequence (FCS) as received in the Ethernet frame may optionally be included as is rather than being deleted or recalculated by the layer 2 switch 118.

Multiple flows may be aggregated and carried along the aggregated pseudowire communications link 612. Traffic in the aggregated pseudowire communications link 612 may appear in different forms dependent upon the transport mechanism used to transport the aggregated link. In one embodiment, the pseudowire flows are transmitted via an Ethernet interface as indicated by reference numeral 640. In this embodiment, the pseudowire frame is encapsulated in an Ethernet frame, including a new Ethernet FCS. It should be noted that the original Ethernet FCS may be retained and not affected by the calculation of the new Ethernet FCS. Thereafter, the aggregate link may be transmitted on the Ethernet interface.

In another embodiment, the aggregated pseudowire communications link 612 is transmitted on a SONET/TDM interface, such as, for example, an STS-3/12/1nv communications link, wherein the pseudowire frame is encapsulated in an Ethernet frame and a GFP frame, as indicated by reference numeral 642. In this embodiment, an Ethernet frame is wrapped around the pseudowire frame, optionally prepended with a LSP label and then encapsulated into a GFP frame. The original FCS may be unmodified, and a new FCS value is calculated for the new Ethernet frame.

In yet another embodiment, the aggregated pseudowire communications link 612 is transmitted on a SONET/TDM interface, such as, for example, an STS-3/12/1nv communications link, wherein the pseudowire frame is encapsulated in a GFP frame, as indicated by reference numeral 644. In this embodiment, a GFP frame is wrapped around the pseudowire frame. The original FCS may be unmodified, and a new FCS value is calculated for the new Ethernet frame.

In yet another embodiment, the aggregated pseudowire communications link 612 is transmitted on a SONET/TDM interface, such as, for example, a DS3, an STS-3/12/1nv communications link, or the like, using X.86, as indicated by reference numeral 646. Similar to the other embodiments, this embodiment wraps an Ethernet frame around the pseudowire frame, and then encapsulates the new Ethernet frame into an X.86 frame. The original FCS is unmodified and new FCS values are added for the Ethernet and X.86 framing. Additional flags may be added as appropriate. Other protocols, framing techniques, and transports may be used.

In any of the frames depicted by reference numerals 640-646, multiple carrier tag portions, such as the LSP labels or pseudowire labels, may appear within each frame to represent nesting of tunnels or nested encapsulations. Referring briefly back to FIG 2, this would correspond to the situation in which, for example, a single large tunnel between layer 2 switch 118 and service emulation instance terminator 130 might be used to encompass all of the flows within label switched paths 210 and 220. Traffic in LSP 210 may receive an additional outer tunnel label as it passes through layer 2 switch 118. The nesting of tunnels may become more useful as an increasing number of aggregation stages and routing hops are applied in the access network.

In FIG 6, the message body and message FCS portions depicted in frames 640 through 646 may constitute a payload of the carrier-tagged frame whereas the remainder of the frame may be referred to as "encapsulation structure" added to the payload. The carrier-applied labels added as a part of this encapsulation are shown in these examples as LSP labels and PW (pseudowire) labels, although any other type of structures could be used. As described above, multiple ones of the carrier tags, namely multiple LSP labels and/or PW labels, may be present in a frame. In some implementations, the addition of carrier tags to a payload or message body may be all the encapsulation that is performed. Otherwise, as exemplified in FIG 6, the carrier tags, and specifically the carrier tag values themselves, may be part of a larger encapsulation structure which may include other fields, addresses, delimiters and such. Carrier tags may be arranged in any manner. A carrier tag structure may or may not comprise other fields in addition to the actual carrier tag values which identify single or aggregate flows, such as tunnel labels, service emulation instance mapping identifiers, pseudowire labels, etc.

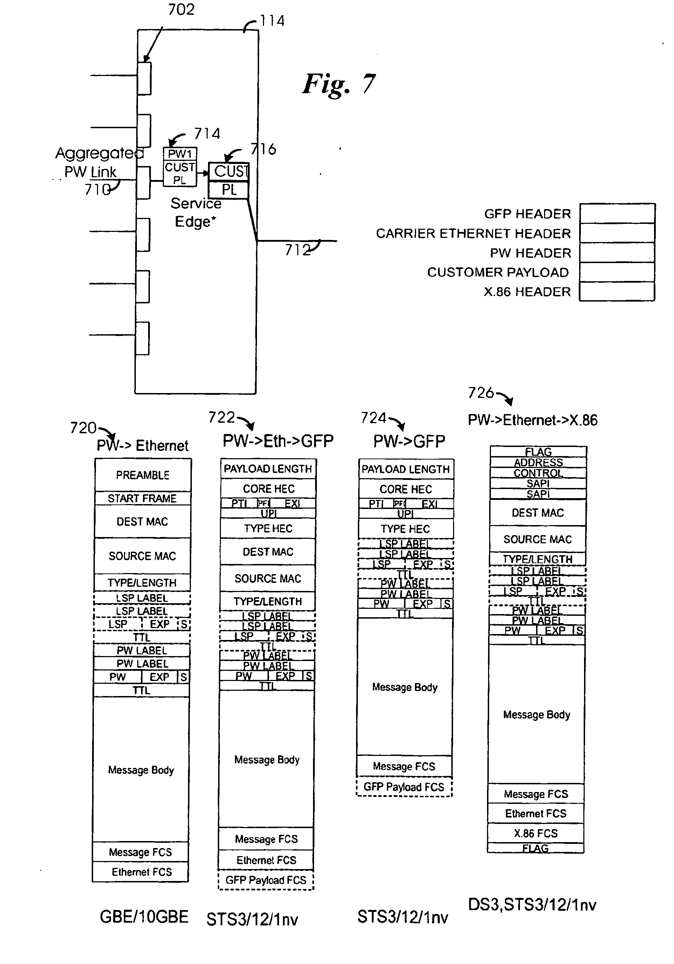

Figure 7 illustrates framing formats in accordance with an embodiment of the present invention. In one embodiment, aggregated pseudowire flows 710 are the flows transmitted by the layer 2 switch 118 as discussed above with reference to Figure 6. In this situation, a decapsulation function 702 may be performed by the service edge 114 or the service emulation terminator 130. In an environment in which the service edge 114 is incapable of or not configured for performing the decapsulation function 702, the layer 2 switch 118 may perform the decapsulation function 702 and substitutes another sub-interface encapsulation, such as, for example, a VLAN over a TDM or GbE interface, or the like, before forwarding the traffic to the service edge. In another situation, the access network may comprise two or more layer 2 switches interconnected. : In this situation, the last layer 2 switch may decapsulate the traffic prior to passing the traffic to the service edge.

The Ethernet, Ethernet/GFP, GFP, and Ethernet/X.86 frames, represented by reference numerals 720, 722, 724, and 726, respectively, correspond to the frames 640, 642, 644, and 646, respectively, discussed above with reference to Figure 6. Upon receipt of the aggregated pseudowire flows 710, a decapsulation function 702 is performed. The decapsulation function 702 removes the header, the FCS, and other flags that may have been added during the encapsulation function related to the framing and performs error checking/frame verification procedures. As indicate d by reference numeral 714, a decapsulated flow includes a pseudowire label and the customer payload. The pseudowire label may be removed resulting in a customer payload 716 as originally received by the access network.

It should be noted that the decapsulation function 702 is illustrated as being performed by the service edge 114 for illustrative purposes only and that the decapsulation function 702 may be performed by other components. For example, in one embodiment, multiple layer 2 switches may be communicatively coupled together and the service edge 114 may not be configured to perform the decapsulation function 702. In this scenario, the layer 2 switch 118 may perform the decapsulation function before forwarding the flow to the service edge 114. In another example, a service emulation terminator 130 may be communicatively coupled between the layer 2 switch 118 and the service edge 114. In this situation, it may be desirable or necessary for the service emulation terminator 130 to perform the decapsulation function 702. It should also be clear that, depending upon nesting practices and presence of multiple stacked carrier tags in the traffic, a decapsulation process may involve multiple stages of removing tags and encapsulation fields from traffic-bearing frames.

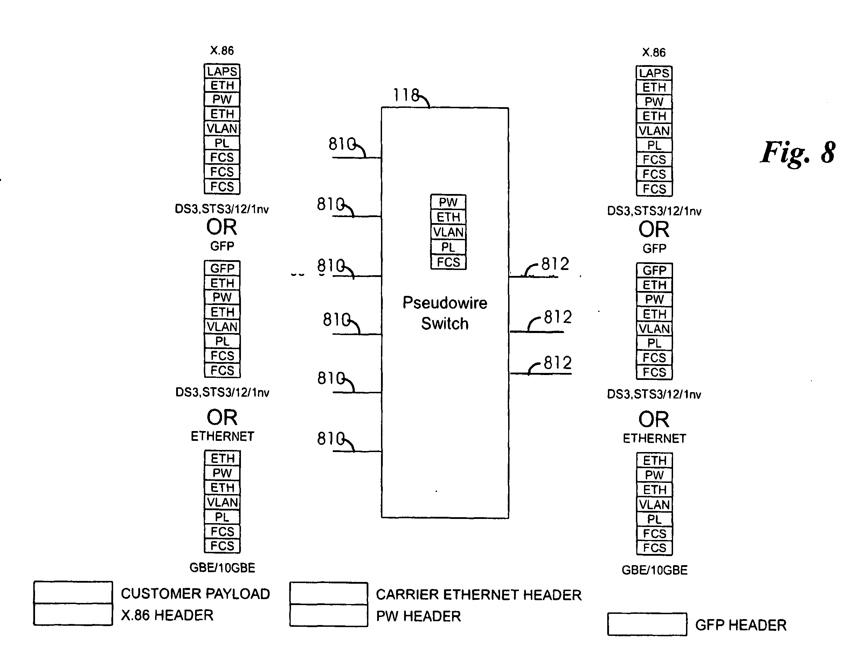

Figure 8 illustrates framing formats in accordance with an embodiment of the present invention. Figure 8 comprises a layer 2 switch 118 configured to perform switching functions based upon pseudowire labels. The input frames, i.e., the frames on the left side of the layer 2 switch 118, represent examples of frames that the layer 2 switch 118 may receive as input, and the output frames, i.e., the frames on the right side of the layer 2 switch 118 represent examples of frames that the layer 2 switch 118 may transmit as output. The input frames may be received on one or more aggregated pseudowire access pipes 810, and may route the frames to any one or more of the aggregated pseudowire network pipes 812.

It should be noted that the layer 2 switch 118 can be configured to replace the framing if necessary. For example, an X.86 frame may be received via an aggregated pseudowire access pipe 810 and routed to an output pipe as a GFP frame over DS3. In this example, the layer 2 switch 118 would remove the X.86 framing information and replace it with the GFP framing information.

It should also be noted that the switching or routing of the messages in these cases can remain based upon the pseudowire label, or other layer 2 identifiers. The framing, such as X.86, GFP, Ethernet, or the like, may not determine the routing. Rather, the layer 2 switch 118 evaluates the pseudowire label and switches or routes the traffic accordingly. In this manner, the routing or switching decisions may be performed independent of the services used by the customer and without evaluating the customer data.

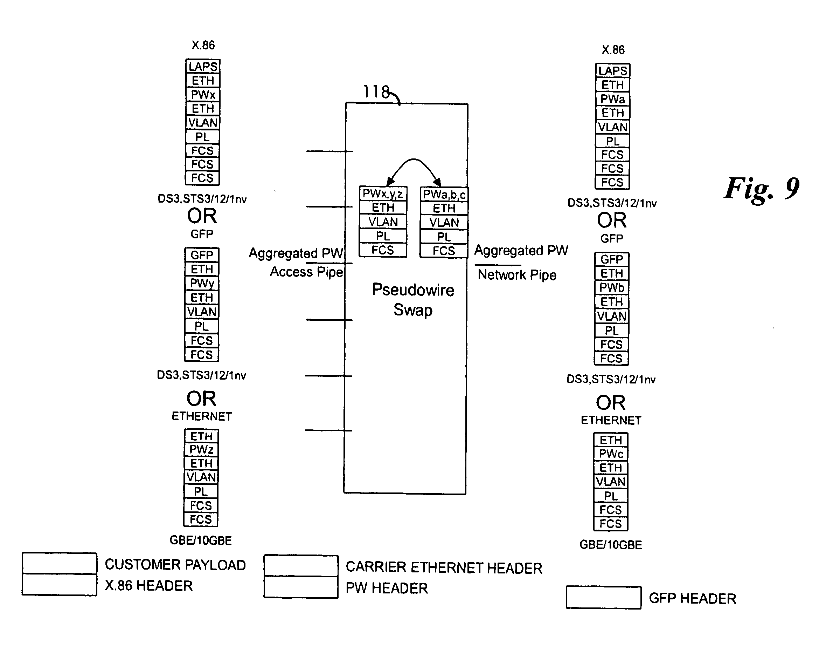

Figure 9 illustrates a label swapping function in accordance with an embodiment of the present invention. The label switching function allows the layer 2 switch 118 to replace one service emulation instance mapping identifier with another. Figure 9 is similar to Figure 8, except that the pseudowire labels are switched between the input and output frames. For example, pseudowire label PWx is switched to pseduo-wire label PWa, pseudowire label PWy is switched to pseduo-wire label PWb, and pseudowire label PWz is switched to pseduo-wire label PWc.

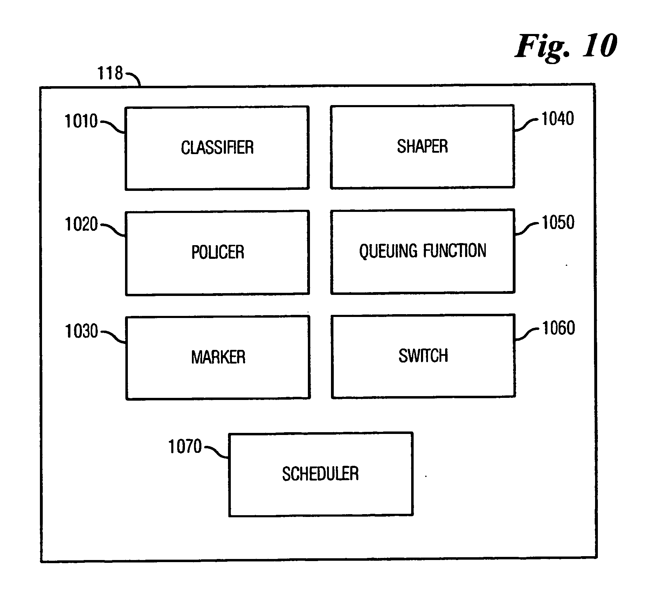

Figure 10 illustrates functions that may be performed by a layer 2 switch in accordance with an embodiment of the present invention. The functions include a classifier 1010, a policer 1020, a marker 1030, a shaper 1040, a queuing function 1050, a switch 1060, and a scheduler 1070.

Generally, the classifier 1010 selects packets based on fields in the packet headers. The classification may be based upon interface, incoming carrier tag, Ethernet priority, and/or MPLS EXP bits. The classification of customer facing ports and service-edge facing ports may also be based upon Type of Service (TOS)/ Diffserv Code Point (DSCP) in the IP header. Matching criteria may be, for example, exact, prefix-only, within a range, masked and/or the use of wildcard.

The policer 1020 (sometimes referred to as a rate-limiter or meter in Diffserv terminology) drops or determines non-conforming packets of a classified flow based upon a specified traffic profile, for example, average rate and maximum burst duration.

The marker 1030 sets the value of the Ethernet priority or TOS/ DSCP byte or MPLS EXPerimental (EXP) Bits, using information from the classifier and/or policer.

The shaper 1040 delays packets within a classified flow to cause them to conform to a specified traffic profile.

The queuing function (or buffering) 1050 provides storage for packets prior to transmission. A queue also includes a function that determines which packets it admits. Examples of the admit function include a storage capacity or a threshold based upon packet marking.

The switch 1060 provides the means to transfer packets from one physical port to another.

The scheduler 1070 selects a packet from a queue and transmits it onto an output link in accordance with a selection discipline, for example, priority queuing, or some form of weighted service across multiple queues.

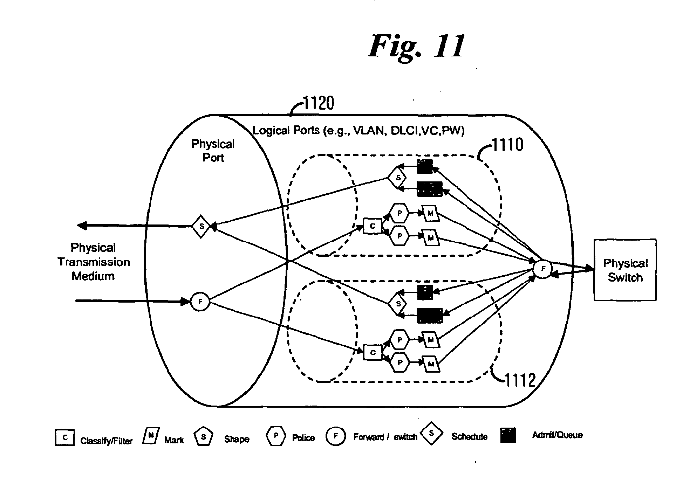

Figure 11 depicts the QoS-related logical functions on two logical ports 1110, 1112 of a physical port 1120 that may be coupled to the layer 2 switch 118 in accordance with one embodiment of the present invention. Generally, a logical port is a layer-2 sub-interface residing on a physical interface. Examples of a logical port or flow include an Ethernet MAC, an Ethernet VLAN, a FR DLCI, an ATM VCC, PPP/HDLC running on a TDM channel, an MPLS LSP, a pseudowire label, or the like. A logical port can implement one or more QoS functional modules, such as classifier, policer, marker, shaper, queue, switch, and scheduler discussed above with reference to Figure 10. The icons defined at the bottom of the figure are shorthand notations for these QoS modules.

The physical port 1120 multiplexes the outputs of multiple logical ports onto a transmission medium using a scheduler, which forwards the received packets to the respective logical port, as shown in the right-hand side of the figure. As shown on the right-hand side of the figure, physical ports also provide interconnections to the physical switch so that a device can forward packets from a receiving logical port to other logical ports based upon forwarding table lookup.

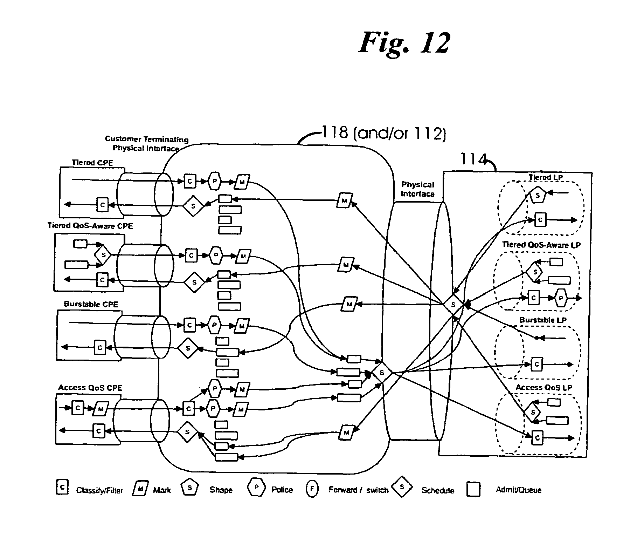

Figure 12 illustrates QoS-related logical functions in accordance with an embodiment of the present invention. In particular, Figure 12 illustrates how QoS functional modules are used in the forwarding operations of CPE 116, the layer 2 switch 118, and the service edge 114 to create three access service classes: tiered, burstable, and access QoS-aware. These examples could apply to an IP Differentiated Service (Diffserv) QoS or to support a prioritized Ethernet service over the packet access network, as discussed below. Other access network services may be implemented based upon service requirements. For example, the access network may be configured such that control traffic could be allocated a separate queue.

The intent of a tiered access service is to provide a "logical pipe" from the CPE 116 to the service edge 114 that has characteristics of reserved capacity with minimal loss and delay variation. This is similar to the approach defined for QoS-aware access over a DSL network as defined by the DSL Forum in TR-59. In order to provide this service, the physical or logical port on the ingress packet access node (e.g., the building aggregation system 112, the layer 2 switch 118, or the like) classifies the traffic and polices it to the committed access rate (CAR). If the tiered CPE is QoS-aware, then it must prioritize traffic and schedule it such that CAR is not exceeded as shown in the left-hand side of Figure 12. The access network process tiered traffic in a separate queue as shown in the figure for delivery to the tiered service edge on the right-hand side of the figure. When the traffic reaches the output logical port of the egress access node, the traffic is shaped to the customer-subscribed rate before being sent to the edge router. This avoids the situation where traffic would be conforming to the policer at ingress to the access network, but clumping that occurs in the access network could cause traffic to be non-conforming at the policer in the edge router. The tiered logical port on the service edge should shape to the capacity allocated to the flow across the access network if the service is not QoS aware, or in the case of a QoS-aware service edge, the aggregate output of a hierarchical scheduler should not exceed the capacity allocated to the flow across the access network. The access network nodes place tiered traffic in the same queue and deliver it to the tiered CPE.

The intent of a burstable service is to provide a best-effort type access to a service node. A specific amount of capacity is not guaranteed by the access network in this case. The CPE 116 and service edge 114 cannot be QoS-enabled in this case because capacity is not guaranteed in the access network. The ingress packet access node polices the traffic and marks some of the traffic as discard eligible to provide fairness amongst customers using best effort access in the inbound direction. These policer settings could be used in admission control and routing for burstable traffic. Burstable service traffic is placed in a queue separate from that used for other access traffic in this example. From the burstable service edge toward the customer, the service edge could be responsible for allocating capacity to each .flow, or a policer could also be configured facing the service edge to provide fairness.

For access QoS aware service, the ingress access node operates on the CPE or application marked fields, such as IP Type of Service (TOS)/Differentiated service (Diffserv) or Ethernet Priority. In the example shown at the bottom of the figure, the ingress access node classifies traffic and directs it to one of two policers and markers. Such traffic is placed in two separate queues for forwarding across the access network to the service edge. In this example, it is assumed that the service edge does not perform policing and marking on ingress. However, on egress, the service node performs classification and hierarchical scheduling to the CAR for traffic destined to the access QoS CPE. The access network would mark and place this traffic into separate queues for delivery to the access QoS CPE.

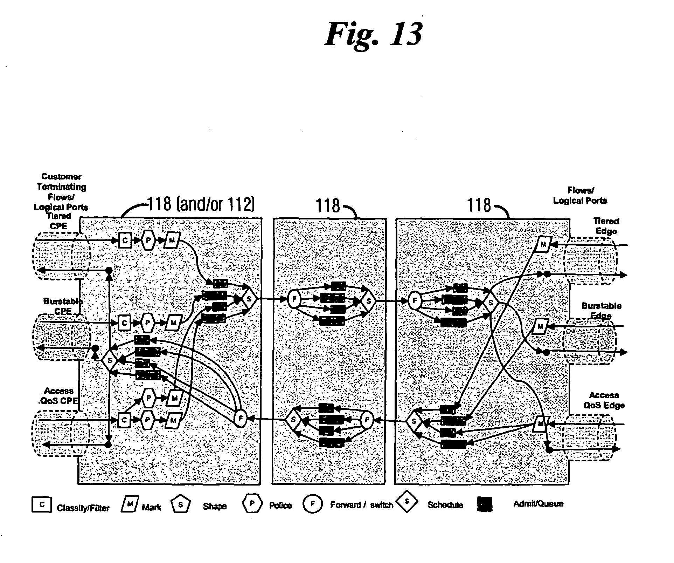

Figure 13 illustrates an example in which an access network consists of one or more layer 2 switches in accordance with an embodiment of the present invention. In this example, the customer has three logical ports on a single physical port on the left-hand side of the figure. The ingress access node implements classification, policing, and marking for tiered, burstable, and access QoS as described above for each flow or logical port. The forwarding engine forwards a packet to an output logical port based on the marked QoS class value in the carrier tag. This QoS class marking in the carrier tag (e.g., Ethernet priority or MPLS EXP bits) is used at intermediate nodes and the egress packet access node is connected to the service edge to place the traffic in a specific queue. In the reverse direction, the layer 2 switch 118 connected to the service edge 114 interprets any marking done by the service edge 114, or may assign a mark based upon logical port (flow) on which the traffic is received. This marking in the QoS class of the carrier tag is used to place traffic in a particular queue for eventual delivery to the CPE logical port. Note that traffic is forwarded across each intermediate access network device without additional rate-limiting actions. Measurements, which include packet drop counts, byte and packet counters for conforming and non-conforming packets, queue high-water marks, or the like, on the access network devices may be used to ensure that the logical pipe is delivered to the service as detailed in the management section.

Although the present invention and its advantages have been described in detail, it should be understood that various changes, substitutions and alterations can be made herein without departing from the scope of the invention as defined by the appended claims. For example, many of the features and functions discussed above can be implemented in software, hardware, or firmware, or a combination thereof.

Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed, that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A method for processing a TDM communication, the method comprising:
receiving a first TDM communication;
determining whether the first TDM communication should be output as a packetized flow or as a TDM communication;
based on the determining, either converting the first TDM communication to a first packetized flow or switching the first TDM communication to a second TDM communication, respectively; and
outputting the first packetized flow or the second TDM communication, respectively.

2. The method of claim 1, wherein the first TDM communication is reconstructed from a second packetized flow.

3. The method of claim 2, wherein the second packetized flow is unpacked from a second TDM communication.

4. The method of claim 1, wherein the outputting includes reassembling the first packetized flow as a second TDM communication.

5. The method of claim 1, wherein the determining step is based on a channel of the TDM communication.

6. The method of claim 1, wherein the outputting includes routing the first packetized flow based upon a carrier tag.

7. The method of claim 1, wherein the outputting includes routing the second TDM communication based upon a carrier tag associated with the first TDM communication.

8. The method of claim 1, wherein the determining is based at least in part on a carrier tag.

9. An apparatus (118) for processing TDM communication and packetized communication, the apparatus comprising:
a TDM communication switch fabric (314);
a communication converter coupled to the TDM communication switch fabric, the communication converter configured to convert among TDM communication and
packetized communication;
a packetized communication switch fabric (316) coupled to the communication converter; and
a communication controller (310) coupled to at least one of the communication converter, the TDM communication switch fabric, and the packetized communication switch fabric, wherein the communication controller (310) is configured to receive information related to processing TDM communication and packetized communication.

## Patentansprüche

1. Verfahren zur Verarbeitung einer TDM Kommunikation, wobei das Verfahren umfasst:
Empfangen einer ersten TDM Kommunikation;
Bestimmung, ob die erste TDM Kommunikation als paketförmiger Strom oder als TDM Kommunikation ausgegeben werden soll;
Basierend auf der Bestimmung, entweder Konvertieren der ersten TDM Kommunikation in einen ersten paketförmigen Strom, oder Schalten der ersten TDM Kommunikation auf eine zweite TDM Kommunikation; und
Ausgeben des ersten paketförmigen Stromes oder der zweiten TDM Kommunikation.

2. Verfahren nach Anspruch 1, wobei die erste TDM Kommunikation aus einem zweiten paketförmigen Strom rekonstruiert ist.

3. Verfahren nach Anspruch 2, wobei der zweite paketförmige Strom entpackt ist aus einer zweiten TDM Kommunikation.

4. Verfahren nach Anspruch 1, wobei die Ausgabe das Wiederzusammenfügen des ersten paketförmigen Stromes als zweiten TDM Kommunikation einschließt.

5. Verfahren nach Anspruch 1, wobei der Bestimmungsschritt basiert auf einem Kanal der TDM Kommunikation.

6. Verfahren nach Anspruch 1, wobei die Ausgabe das Routing des ersten paketförmigen Stromes basierend auf einem Carrier Tag einschließt.

7. Verfahren nach Anspruch 1, wobei die Ausgabe das Routing der zweiten TDM Kommunikation basierend auf einem Carrier Tag einschließt, der assoziiert ist mit der ersten TDM Kommunikation.

8. Verfahren nach Anspruch 1, wobei die Bestimmung zumindest teilweise auf einem Carrier Tag basiert.

9. Vorrichtung (118) zur Verarbeitung von TDM Kommunikationen und paketförmigen Kommunikationen, wobei die Vorrichtung umfasst:
eine TDM Kommunikationsschalterstruktur (314);
einen Kommunikationskonverter, der mit der TDM Kommunikationsschalterstruktur gekoppelt ist, wobei der Kommunikationskonverter konfiguriert ist, um zwischen einer TDM Kommunikation und einer paketförmigen Kommunikation zu konvertieren;
eine Schalterstruktur (316) für paketförmige Kommunikationen, gekoppelt mit dem Kommunikationskonverter;
ein Kommunikationscontroller (310), gekoppelt mit zumindest einem der Kommunikationskonverter, der TDM Kommunikationsschalterstruktur und der Schalterstruktur für paketförmige Kommunikationen, wobei der Kommunikationscontroller (310) konfiguriert ist, um Informationen bezüglich der Verarbeitung von TDM Kommunikationen und paketförmigen Kommunikationen zu erhalten.

## Revendications

1. Procédé de traitement d'une communication TDM, le procédé comprenant les étapes consistant à :
recevoir une première communication TDM ;
déterminer si la première communication TDM doit être délivrée en tant qu'un flux en paquet ou en tant qu'une communication TDM ;
sur la base de la détermination, soit convertir la première communication TDM en un premier flux en paquet, soit commuter la première communication TDM en une deuxième communication TDM, respectivement ; et
délivrer le premier flux en paquet ou la deuxième communication TDM, respectivement.

2. Procédé de la revendication 1, dans lequel la première communication TDM est reconstruite à partir d'un deuxième flux en paquet.

3. Procédé selon la revendication 2, dans lequel le deuxième flux en paquet est éclaté à partir d'une deuxième communication TDM.

4. Procédé selon la revendication 1, dans lequel l'étape de délivrance comprend le réassemblage du premier flux en paquet en tant que deuxième communication TDM.

5. Procédé selon la revendication 1, dans lequel l'étape de détermination est basée sur un canal de la communication TDM.

6. Procédé selon la revendication 1, dans lequel l'étape de délivrance comprend l'acheminement du premier flux en paquet sur la base d'une étiquette de porteur.

7. Procédé selon la revendication 1, dans lequel l'étape de délivrance comprend l'acheminement de la deuxième communication TDM sur la base d'une étiquette de porteur associée à la première communication TDM.

8. Procédé selon la revendication 1, dans lequel l'étape de détermination est basée, au moins en partie, sur une étiquette de porteur.

9. Appareil (118) de traitement de communication TDM et de communication en paquet, l'appareil comprenant :
une matrice de commutation de communication TDM (314) ;
un convertisseur de communication, relié à la matrice de commutation de communication TDM, le convertisseur de communication étant configuré pour convertir parmi une communication TDM et une communication en paquet ;
une matrice de commutation de communication en paquet (316), reliée au convertisseur de communication ; et
un contrôleur de communication (70) relié à au moins l'un du convertisseur de communication, de la matrice de commutation de communication TDM et de la matrice de commutation de communication en paquet, dans lequel le contrôleur de communication (310) est configuré pour recevoir des informations ayant trait au traitement des communications TDM et des communications en paquet.
